(19) Europäisches Patentamt / European Patent Office / Office européen des brevets

(11) **EP 3 838 463 B1**

(12) **EUROPÄISCHE PATENTSCHRIFT**

(45) Veröffentlichungstag und Bekanntmachung des Hinweises auf die Patenterteilung:
**13.04.2022   Patentblatt 2022/15**

(21) Anmeldenummer: **20215414.2**

(22) Anmeldetag: **18.12.2020**

(51) Internationale Patentklassifikation (IPC):
**B23F 19/05** *(2006.01)*   **B23F 5/02** *(2006.01)*
**B23F 1/02** *(2006.01)*   B23F 21/03 *(2006.01)*
B23F 5/16 *(2006.01)*

(52) Gemeinsame Patentklassifikation (CPC):
**B23F 19/05; B23F 1/02; B23F 5/02;** B23F 5/163;
B23F 21/03

(54) **VERFAHREN ZUM FEINBEARBEITEN EINES MIT EINER VERZAHNUNG VERSEHENEN WERKSTÜCKS**

METHOD FOR FINE PROCESSING OF A TOOTHED WORKPIECE

PROCÉDÉ DE FINITION D'UNE PIÈCE POURVUE D'UNE DENTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2019   DE 102019134924**

(43) Veröffentlichungstag der Anmeldung:
**23.06.2021   Patentblatt 2021/25**

(73) Patentinhaber: **Präwema Antriebstechnik GmbH 37269 Eschwege/Werra (DE)**

(72) Erfinder:
• **Schieke, Jörg**
  **99092 Erfurt-Marbach (DE)**
• **Holderbein, Walter**
  **37269 Eschwege (DE)**
• **Reinhardt, Jörg**
  **99826 Berka v.d.H. (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
**WO-A1-2012/159942      WO-A1-2015/198670**
**WO-A1-2018/130260      DE-A1- 2 060 579**
**DE-U1- 9 409 049**

**Beschreibung**

Die Erfindung betrifft ein Verfahren zum Feinbearbeiten eines mit einer Verzahnung versehenen Werkstücks, bei dem Zähne eines zahnradförmigen Verzahnungswerkzeugs, das um eine Drehachse rotiert, mit Zähnen der Verzahnung des um eine Drehachse rotierenden Werkstücks in wälzenden Eingriff gebracht werden, während das Verzahnungswerkzeug und das Werkstück in einer zur Drehachse des Werkstücks parallelen Richtung relativ zueinander bewegt werden, wobei die Dicke der Zähne des Verzahnungswerkzeugs jeweils ausgehend von ihrer bezogen auf die jeweilige Bewegung in axialer Richtung vorne liegenden Stirnseite bis zu einem Dickenmaximum zunimmt. Ein derartiges Verfahren gemäß dem Oberbegriff des Anspruchs 1 ist aus dem Dokument WO 2018/130260 A1 bekannt.

Bei der erfindungsgemäß durchgeführten Feinbearbeitung handelt es sich typischerweise um ein Verzahnungs- oder Zahnradhonen, bei dem mittels eines Verzahnungswerkzeugs, an dessen Zähne geometrisch unbestimmte Schneiden gebildet sind, Material der Verzahnung des Werkstücks abgetragen wird, das in vorangegangenen Arbeitsschritten typischerweise durch eine spanabhebende Bearbeitung mit definierter Klinge seine Grundform erhalten hat und gehärtet worden ist. Durch die Feinbearbeitung erhält die Verzahnung des Werkstücks eine Endgeometrie, deren Genauigkeit und Oberflächenbeschaffenheit höchste Anforderungen erfüllt.

Üblicherweise sind die Feinbearbeitungswerkzeuge als keramisch- oder harzgebundene Werkzeuge hergestellt, an denen eine Verzahnung ausgebildet ist, deren Gestalt der Form mit der zu bearbeitenden Verzahnung korrespondiert. Im Zuge der jeweiligen Feinbearbeitung kommt es zu Verschleiß am Feinbearbeitungswerkzeug. Um sicherzustellen, dass die am zu bearbeitenden Werkstück durch die Feinbearbeitung zu erzeugenden Formelemente, d.h. beispielsweise eine Verzahnung, den an ihre Präzision gestellten Anforderungen genügen, müssen die Feinbearbeitungswerkzeuge daher in bestimmten Zeitabständen abgerichtet werden. Durch den Abrichtvorgang wird das Feinbearbeitungswerkzeug in einen Zustand versetzt, in dem eine optimale Präzision des Bearbeitungsergebnisses bei gleichzeitig hoher Abtragleistung gewährleistet ist.

Alternativ sind aber auch Honwerkzeuge bekannt, die aus so harten, verschleißbeständigen Werkstoffen bestehen, dass sie über eine lange Einsatzdauer ihre Geometrie einwandfrei beibehalten und dementsprechend auch kein regelmäßiges Abrichten erforderlich ist.

Bei der Zahnradhonbearbeitung wälzen das zahnradförmige Honwerkzeug und das zu bearbeitende Zahnrad in synchronen Drehbewegungen kontinuierlich aufeinander ab. Die Verzahnungen von Honwerkzeug und Zahnrad kämmen dabei üblicherweise unter einem Achskreuzwinkel, der zwischen den windschiefen Drehachsen von Honwerkzeug und Zahnrad eingestellt ist.

Durch die Abwälzdrehung und den Achskreuzwinkel liegt zwischen den Zahnflanken des Honwerkzeugs und den Zahnflanken des zu bearbeitenden Zahnrads im Wälzkontakt eine gleitende Relativbewegung vor, die den Spanabtrag am Zahnrad bewirkt. Die Gleitbewegung des Honwerkzeugs im Kontakt mit einer Zahnflanke des Zahnrads setzt sich aus einer durch die Abwälzdrehung erzeugten radialen Bewegung und einer durch den Achskreuzwinkel erzeugten axialen Bewegung zusammen.

Gleichzeitig wird das Honwerkzeug relativ zum Zahnrad oder das Zahnrad relativ zum Honwerkzeug in Richtung der Drehachse des Zahnrads bewegt, um eine gleichmäßige Bearbeitung der Zahnflanken des Zahnrades über deren Breite zu erzielen. Der Materialabtrag wird dabei üblicherweise über die Zustellung in radialer Richtung eingestellt. Weist das zu honende Zahnrad eine Schrägverzahnung auf, so wird die oszillierende Bewegung als "Schraubenbewegung" ausgeführt, indem der linearen Bewegung des Zahnrads entlang seiner Drehachse eine Rotation um seine Drehachse überlagert wird.

Ein Beispiel für ein Verfahren der voranstehend erläuterten ist beispielsweise aus dem japanischen Gebrauchsmuster JP H02-82424 U bekannt. Bei dem bekannten Verfahren wird ein Honwerkzeug mit einer Verzahnung mit Zähnen eingesetzt, auf dessen Zahnflächen jeweils eine ballig ausgebildete Schicht von Hartstoff aufgetragen ist. Auf diese Weise sind die Zahnflanken der Zähne der Verzahnung jeweils ausgehend von ihren beiden gegenüberliegenden Stirnseiten ballig ausgewölbt. Die Dicke der Zähne nimmt dementsprechend ausgehend von der jeweiligen Stirnseite bis zu einem Dickenmaximum zu, das mittig zwischen den Stirnseiten der Zähne angeordnet ist. Für die Honbearbeitung wird das Werkzeug in bezogen auf seine Drehachse axialer Richtung in der Verzahnung des zu bearbeitenden, innenverzahnten Werkstücks bewegt und trägt dabei Material an den Zähnen des Werkstücks ab. Dieser Vorgang wird wiederholt, bis alle Zähne bearbeitet sind.

Ein anderes Verfahren, bei dem ein Verzahnungswerkzeug zur Feinhartbearbeitung eingesetzt wird, dessen Zähne ballig ausgewölbte Zahnflanken aufweisen, ist aus der WO 2018/130260 A1 bekannt. Bei diesem bekannten Verfahren wird ein verzahntes, um seine Drehachse rotierendes Hartfeinbearbeitungswerkzeug in einem Durchgang oder in mehreren Durchgängen unterschiedlicher radialer Zustelltiefe unter einer Vorschubbewegung mit einer zur Drehachse der bearbeiteten Verzahnung parallelen Richtungskomponente und unter einem von Null verschiedenen Achskreuzwinkel in wälzenden Bearbeitungseingriff mit der bearbeiteten Verzahnung gebracht. Dabei wird mit einem Zahnflankenbereich der Werkzeugverzahnung, der eine in Folge der balligen Gestaltung der Zahnflanken von der der bearbeiteten Verzahnung zugewandten Stirnseite in Flankenlinienrichtung ansteigende Zahndicke aufweist, Material von der bearbeiteten Verzahnung abgetragen.

Die voranstehend erläuterten, aus dem Stand der Technik bekannten Verfahren setzen voraus, dass die Breite der zum Einsatz kommenden Verzahnungswerkzeuge jeweils größer ist als die Breite der zu bearbeitenden Zähne der am Werkstück vorgesehenen Verzahnung. Dabei führen die beim Stand der Technik eingesetzten Werkzeuge während der Bearbeitung in bezogen auf ihre Drehachse axialer Richtung oszillierende Bewegungen durch, um den Materialabtrag zu bewirken oder zumindest zu unterstützen. Jedoch sind diese Relativbewegungen so begrenzt, dass Verzahnungswerkzeug und Werkstück immer in Eingriff bleiben. Auf diese Weise gelingt es, die durch die Geometrie der Zähne des Verzahnungswerkzeugs definierte Form optimal an den Zähnen des jeweils bearbeiteten Werkzeug abzubilden und gleichzeitig maximierte Standzeiten des Verzahnungswerkzeugs zu erreichen.

Ausgehend von dem voranstehend erläuterten Stand der Technik hat sich die Aufgabe gestellt, ein Verfahren zur Feinbearbeitung von verzahnten Werkstücken zu schaffen, mit dem es möglich ist, weiter gesteigerte Abtragsleistungen bei gleichzeitig langer Lebensdauer zu erreichen.

Die Erfindung hat diese Aufgabe durch das in Anspruch 1 angegebene Verfahren gelöst.

Es versteht sich dabei von selbst, dass ein Fachmann bei der Durchführung des erfindungsgemäßen Verfahrens und seiner hier erläuterten Varianten und Ausbaumöglichkeiten diejenigen vorliegend nicht explizit erwähnten Arbeitsschritte ergänzt, von denen er aufgrund seiner praktischen Erfahrung weiß, dass sie bei der Durchführung solcher Verfahren regelmäßig angewendet werden.

Vorteilhafte Ausgestaltungen der Erfindung sind in den abhängigen Ansprüchen angegeben und werden wie der allgemeine Erfindungsgedanke nachfolgend im Einzelnen erläutert.

Beim erfindungsgemäßen Verfahren zum Feinbearbeiten eines mit einer Verzahnung versehenen Werkstücks werden somit, wie beim eingangs erläuterten Stand der Technik, Zähne eines zahnradförmigen Verzahnungswerkzeugs, das um eine Drehachse rotiert, mit Zähnen der Verzahnung des um eine Drehachse rotierenden Werkstücks in wälzenden Eingriff gebracht, während das Verzahnungswerkzeug und das Werkstück in einer zur Drehachse des Werkstücks parallelen Richtung relativ zueinander bewegt werden, wobei die Dicke der Zähne des Verzahnungswerkzeugs jeweils ausgehend von ihrer bezogen auf die jeweilige Bewegung in axialer Richtung vorne liegenden Stirnseite bis zu einem Dickenmaximum zunimmt.

Erfindungsgemäß gilt nun für das aus der Breite Bw der Zähne der Verzahnung des Werkstücks und der Breite Bz der Zähne des Verzahnungswerkzeugs gebildete Verhältnis Bw/Bz:

$$2 \leq Bw/Bz \leq 20$$

Gleichzeitig wird erfindungsgemäß das Verzahnungswerkzeug vor jedem in der jeweiligen axialen Richtung erfolgenden Durchfahren seiner Zähne durch die Zahnlücken der Verzahnung des Werkstücks an einer Position positioniert, bei der sich das Dickenmaximum der Zähne des Verzahnungswerkzeugs außerhalb der Verzahnung des Werkstücks befindet. Anschließend durchfahren in Folge der Relativbewegung von Werkstück und Verzahnungswerkzeug in axialer Richtung AX+,AX- die Zähne des Verzahnungswerkzeugs die ihnen jeweils zugeordnete Zahnlücke der Verzahnung des Werkstücks, bis das Dickenmaximum jedes Zahns aus der ihm zugeordneten Zahnlücke wieder ausgetreten ist.

Grundlage des erfindungsgemäßen Verfahrens ist also die Verwendung eines zahnradförmigen, mit dem jeweils zu bearbeitenden Werkstück paarbaren Verzahnungswerkzeugs, das Zähne aufweist, die gegenüber den Zähnen der Verzahnung des Werkstücks schmale Zähne aufweist. Indem die Breite der Zähne des Verzahnungswerkzeugs höchstens der Hälfte, insbesondere höchstens einem Drittel (3 ≤ Bw/Bz) oder höchstens einem Viertel (4 ≤ Bw/Bz) der Breite der Zähne des Werkstücks entspricht, kann das Verzahnungswerkzeug bei vergleichbar kleinen Stellwegen vor jedem Durchgang durch die Zahnlücken des Werkstücks außerhalb des Werkstücks so positioniert werden, dass die in Richtung der axialen Bewegung vordere Stirnseite der Zähne des Verzahnungswerkzeugs außerhalb der Verzahnung des Werkstücks steht.

Dabei kann die in Bezug auf das Werkstück radiale Position des Verzahnungswerkzeugs so eingerichtet werden, dass beim anschließend absolvierten Durchlauf der Zähne des Verzahnungswerkzeugs durch die Verzahnung des Werkstücks eine ausreichende Materialmenge abgetragen wird.

Entscheidend für die Erfindung ist dabei, dass für die Feinbearbeitung das Verzahnungswerkzeug mit seinen Zähnen jeweils zumindest soweit in axialer Richtung durch die Verzahnung des Werkstücks durchgetaucht wird, bis die Stelle, an denen der jeweilige Zahn des Verzahnungswerkzeugs seine größte Dicke aufweist, die von ihm durchtauchte Zahnlücke des Werkstücks verlassen hat. Werden bei der erfindungsgemäßen Feinbearbeitung mehrere Durchläufe absolviert, d.h. die Zähne des Verzahnungswerkzeugs in axialer Richtung mehrfach durch die Zahnlücken des Werkstücks bewegt, so wird die Relativbewegung in axialer Richtung praktischerweise jeweils so lange fortgesetzt, bis die dickste Stelle aller Zähne des Verzahnungswerkzeugs die Zahnlücken des Werkstücks verlassen haben und die für den gewünschten Materialabtrag im folgenden Durchlauf erforderliche Zustellung in radialer Richtung erfolgen kann.

Der Materialabtrag erfolgt beim erfindungsgemäßen Verfahren somit in der Weise, dass die Zähne des Verzahnungswerkzeugs zunächst mit ihrer Stirnseite jeweils in Eingriff mit der zugeordneten Zahnlücke der Verzahnung des Werkstücks kommen, an der sie die geringste Dicke haben. Der Materialabtrag an dem jeweils mit dem Zahn des Verzahnungswerkzeugs in Kontakt kommenden Zahns des Werkstücks beginnt dabei unmittelbar mit dem Eingriff. Bei fortgesetzter axialer Bewegung drängen die ausgehend von ihrer Stirnseite zunehmend dicker werdenden Zähne immer tiefer in das Material der Zähne der Verzahnung des Werkstücks, so dass fortlaufend mehr Material von den Zähnen der Verzahnung des Werkstücks abgetragen wird, bis das Dickenmaximum der Zähne des Verzahnungswerkzeugs erreicht ist. Das durch die Zähne des Verzahnungswerkzeugs abgetragene Materialvolumen und damit einhergehend die Belastung können dabei durch die Gestaltung der Dickenzunahme der Zähne des Verzahnungswerkzeugs direkt festgelegt werden.

Indem diese Zunahme kontinuierlich erfolgt, können sprunghaft wechselnde Belastungen vermieden werden. Besonders gleichmäßige Belastungen können dabei erreicht werden, wenn die Dickenzunahme linear erfolgt. Sollen besonders hohe Genauigkeiten bei der Fertigung gewährleistet werden, kann es hierzu jedoch auch sinnvoll sein, die Dickenzunahme nicht linear, sondern gemäß einer Funktion auszulegen, bei der es in einem an die jeweils zuerst in Eingriff mit der Verzahnung des Werkstücks kommende Stirnseite anschließenden Bereich zu einem höheren Materialabtrag kommt als in einem darauf folgenden Bereich. Eine solche Auslegung kann beispielsweise dadurch erreicht werden, dass die Zunahme der Dicke der Zähne einer Kreis- oder Ellipsenfunktion folgt.

Mit dem erfindungsgemäßen Verfahren ist es bei entsprechender Dimensionierung der Belastbarkeit und Form der Zähne des Verzahnungswerkzeugs möglich, den Materialabtrag, der beim Durchfahren der jeweiligen Zahnlücke der Verzahnung des Werkstücks an mindestens einer Zahnflanke der die betreffende Zahnlücke begrenzenden Zähne erzielt wird, zu maximieren. Dies kann so weit gehen, dass in nur einem Durchlauf das Fertigmaß der Verzahnungsgeometrie erreicht wird.

Dabei sind die Prozesskräfte bei der Durchführung des erfindungsgemäßen Verfahrens aufgrund der geringen Größe der Fläche, in dem es zum Kontakt zwischen der Verzahnung des Verzahnungswerkzeugs und des Werkzeugs kommt, gegenüber solchen Verfahren deutlich reduziert, bei denen Werkzeuge mit einer Zahnbreite eingesetzt werden, die mindestens der Breite der Zähne des zu bearbeitenden Werkzeugs ist.

Eine während eines erfindungsgemäß durchgeführten axialen Durchlaufs erfolgende radiale Zustellung des Verzahnungswerkzeugs auf das Werkstück zu ist beim erfindungsgemäßen Verfahren nicht erforderlich. Stattdessen kann im Fall, dass größere Materialabträge erforderlich sind, um die gewünschte Endgeometrie an den Zähnen der Verzahnung des Werkstücks abzubilden, die Relativbewegung zwischen dem Werkstück und dem Verzahnungswerkzeug in zwei oder mehr Durchläufen absolviert werden, wobei jeweils zwischen dem Ende des jeweils vorangegangenen Durchlaufs und dem Beginn des jeweils folgenden Durchlaufs die relative Stellung von Werkstück und Verzahnungswerkzeug in radialer Richtung so verändert wird, dass pro Durchlauf ein optimaler Materialabtrag erfolgt. Hierzu wird, wie schon erwähnt, die Relativbewegung in axialer Richtung jeweils so weit fortgesetzt, dass sich die dickste Stelle der Zähne des Verzahnungswerkzeugs außerhalb der Zahnlücken befindet und eine Zustellung in radialer Richtung erfolgen kann.

Grundsätzlich eignet sich das erfindungsgemäße Verfahren zur Bearbeitung aller mit Verzahnungen versehenen Werkstücke, bei denen während der Bearbeitung ein Wälzeingriff zwischen der Verzahnung des Verzahnungswerkzeugs und der Verzahnung des Werkstücks bei gleichzeitiger Relativbewegung von Werkstück und Werkzeug in eine bezogen auf die Drehachse des Werkstücks axiale Richtung möglich ist. Besonders praxisgerecht erweist sich das erfindungsgemäße Verfahren dabei für die Feinbearbeitung von Zahnrädern, die während der Bearbeitung um eine Werkstück-Drehachse rotieren. Hierzu zählt insbesondere die Feinbearbeitung von innenverzahnten Zahnrädern, bei der außenverzahnte Verzahnungswerkzeuge eingesetzt werden. Zur Abtragsleistung kann dabei in an sich bekannter Weise dadurch beigetragen werden, dass die Drehachse des Verzahnungswerkzeugs und des Werkstücks unter einem Achskreuzwinkel ausgerichtet sind.

Grundsätzlich ließe sich die beim erfindungsgemäßen Verfahren vollzogene Relativbewegung von Werkstück und Verzahnungswerkstück dadurch realisieren, dass Werkstück oder Verzahnungswerkzeug bewegt werden, wobei sogar eine in jeweils entgegengesetzte axiale Richtung erfolgende Bewegung von Werkstück und Verzahnungswerkzeug möglich ist. In der Praxis hat sich dabei gezeigt, dass eine maschinentechnische Umsetzung des erfindungsgemäßen Verfahrens dann besonders einfach ist und zu optimierten Arbeitsergebnissen führt, wenn nur das Werkstück in axialer Richtung bewegt wird, während das Verzahnungswerkzeug während der Bearbeitung bezogen auf die axiale Richtung stillsteht und nur um seine Drehachse rotiert.

Um die im Einsatz auf ihm lastenden Belastungen ertragen zu können, müssen die Zähne eines erfindungsgemäß eingesetzten und gestalteten Verzahnungswerkzeugs eine gewisse Mindestbreite aufweisen. Hier hat es sich in der Praxis gezeigt, dass die Breite der Zähne nicht weniger als einem Zwanzigstel der Breite der Zähne des jeweils zu bearbeitenden Werkstücks entsprechen sollten. Die Praxis zeigt hier, dass sich das erfindungsgemäße Verfahren besonders betriebssicher umsetzen lässt, wenn für das Verhältnis Bw/Bz gilt:

$$2 < Bw/Bz < 20,$$

wobei Verhältnisse Bw/Bz für die gilt:

$$2 < Bw/Bz < 5$$

im Hinblick auf die Dauerhaltbarkeit des Verzahnungswerkzeugs besonders vorteilhaft sind.

Grundsätzlich ist es möglich, beim erfindungsgemäßen Verfahren jeweils ausgehend von einer Ausgangsposition, bei der sich die eine Stirnseite der Zähne des Verzahnungswerkzeugs vor der zugeordneten ersten Stirnseite der Zähne der Verzahnung des Werkstücks befindet, die Bewegung des Werkzeugs durch die Verzahnung des Werkstücks in erfindungsgemäßer Weise durchzuführen, bis die jeweils andere Stirnseite der Zähne des Verzahnungswerkzeugs außerhalb der Verzahnung des Werkstücks benachbart zur der ersten Stirnseite gegenüberliegenden zweiten Stirnseite der Zähne der Verzahnung des Werkstücks befindet, um dann das Werkzeug, ohne es dabei in Eingriff mit der Verzahnung des Werkstücks zu bringen, wieder zurück in die Ausgangsposition zu bewegen und, gegebenenfalls nach einer radialen Zustellung des Verzahnungswerkzeugs auf die Verzahnung des Werkstücks zu, einen erneuten Durchlauf zu beginnen.

Insbesondere in Fällen, in denen mehr als ein Durchlauf erforderlich ist, um die Verzahnung des Werkzeugs auf Endmaß fertig feinzubearbeiten, erweist es sich im Hinblick auf die Effektivität der Umsetzung des erfindungsgemäßen Verfahrens jedoch als vorteilhaft, wenn die Relativbewegung zwischen dem Werkstück und dem Verzahnungswerkzeug in periodisch wechselnder axialer Richtung durchgeführt wird, wobei in diesem Fall das Dickenmaximum der Zähne der Verzahnung des Verzahnungswerkzeugs jeweils zwischen den Stirnseiten der Verzahnung anzuordnen ist und die Dicke der Zähne des Verzahnungswerkzeugs ausgehend von jeder ihrer Stirnseite bis zum Dickenmaximum des jeweiligen Zahns zunimmt. Bei dieser Ausgestaltung befinden sich die Zähne des in diesem Fall oszillierend zwischen zwei Umkehrpositionen der axialen Bewegung hin- und her bewegten Verzahnungswerkzeugs sowohl bei der Hin- als auch bei der Rückbewegung in Eingriff mit den Zähnen des Werkstücks, so dass sowohl bei der Hin- als auch bei der Rückbewegung Material an mindestens einer der die jeweilige Zahnlücke begrenzenden Zahnflanken der Zähne des Werkstücks abgetragen wird. Im Hinblick auf die Gleichmäßigkeit des Materialabtrags ist es dabei zweckmäßig, das Dickenmaximum der Zähne des Verzahnungswerkzeugs mittig zwischen deren Stirnseiten auszubilden.

Das Werkzeug kann aus allen Werkstoffen bestehen, die für die Herstellung von Honwerkzeugen und desgleichen im Stand der Technik bekannt sind. Es kann dabei beispielsweise so ausgeführt sein, dass es nach einer bestimmten Einsatzdauer abgerichtet werden kann, um seine Geometrie wieder so zu schärfen, dass eine im Hinblick auf die geometrischen Anforderungen optimale Maßhaltigkeit an den erfindungsgemäß bearbeiteten Zähnen des Werkstücks erhalten wird. Genauso ist es möglich, ein erfindungsgemäß eingesetztes und gestaltetes Stahlflachprodukt aus Werkstoffen zu erzeugen, die keine Abrichtbearbeitung erforderlich machen, sondern aus sich heraus ausreichend lange Lebensdauern des Werkstücks gewährleisten.

Die bei erfindungsgemäßer Vorgehensweise minimierte Größe der Fläche, in der während der Feinbearbeitung Kontakt zwischen dem jeweiligen Zahn des Verzahnungswerkzeugs und dem jeweiligen Zahn des Werkstücks besteht, erlaubt es, die Relativbewegung zwischen dem Verzahnungswerkzeug und dem Werkzeug so vorzunehmen, dass an dem jeweils bearbeiteten Zahn des Werkstücks zusätzliche Formelemente abgebildet werden. So kann die erfindungsgemäß in bezogen auf die Drehachse des Werkstücks in axialer Richtung immer erfolgende Relativbewegung durch Bewegungen um mindestens eine weitere Achse, wie eine radiale Zustellung während des jeweiligen Durchlaufs, überlagert werden, um an den Zähnen des Werkstücks bestimmte Formelemente, wie eine bestimmte Breitenballigkeit, eine Konizität oder eine Endrücknahme, zu erzeugen.

Nachfolgend wird die Erfindung anhand einer ein Ausführungsbeispiel darstellenden Zeichnung näher erläutert. Es zeigen jeweils schematisch:

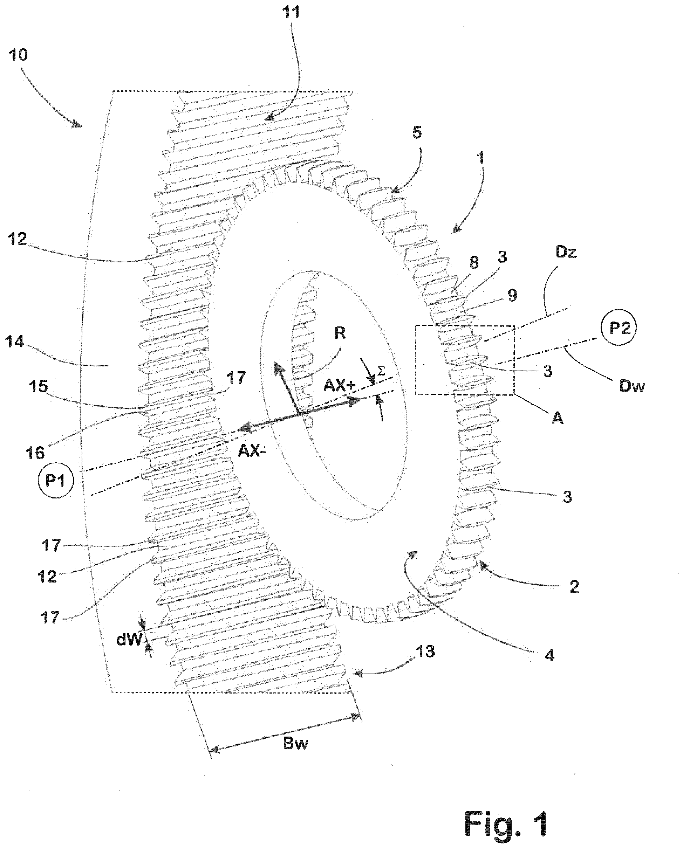

Fig. 1   ein außenverzahntes Verzahnungswerkzeug im Eingriff mit der Innenverzahnung eines Werkstücks in einer perspektivischen Ansicht;

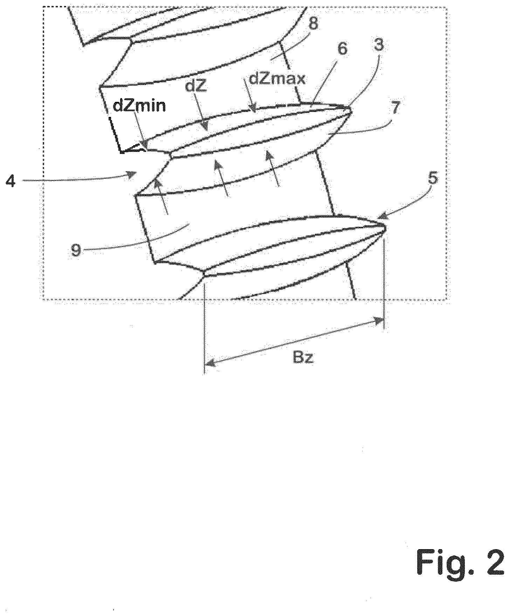

Fig. 2   einen vergrößerten Ausschnitt A von Fig. 1.

Das aus einem hierzu im Stand der Technik üblicherweise verwendeten Werkstoff gefertigte Verzahnungswerkzeug 1 ist in einem hier der Übersichtlichkeit halber nicht gezeigten Werkzeughalter gehalten, der wiederum in an sich bekannter Weise mit einem Drehantrieb verkoppelt ist, über den das Verzahnungswerkzeug 1 im Gebrauch um eine Werkzeugdrehachse Dz rotierend angetrieben ist.

Das Verzahnungswerkzeug 1 weist eine als Geradverzahnung ausgebildete Außenverzahnung 2 auf, die in konventioneller Weise durch eine Vielzahl von in gleichmäßigen Winkelabständen um die Werkzeugdrehachse Dz verteilten Zähnen 3 gebildet ist. Die Zähne 3 sind jeweils achsparallel zur Werkzeugdrehachse Dz ausgerichtet und erstrecken sich über die Breite Bz des Verzahnungswerkzeugs 1 zwischen den Stirnseiten 4, 5 des Verzahnungswerkzeugs 1.

Jeder Zahn 3 weist Zahnflanken 6,7 auf, von denen jeweils eine den Zahnlücken 8,9 der Verzahnung 2 des Verzahnungswerkzeugs 1 zugeordnet ist, die von dem jeweiligen Zahn 3 an ihrer einen Seite begrenzt werden. Die Zahnflanken 6,7 sind dabei ballig nach außen in Richtung der jeweiligen Zahnlücke 8,9 ausgewölbt. Die Flankenlinie der Zahnflanken 6,7 beschreibt dabei einen Kreisbogen, folgt also einer Kreisfunktion, so dass die Zähne 3 an ihren den Stirnseiten 4,5 jeweils zugeordneten Enden jeweils eine minimale Dicke dZmin aufweisen und die Dicke dZ der Zähne 3 ausgehend von der minimalen Dicke dZmin in bezogen auf die Werkzeugdrehachse Dz der Zähne 3 axialer Richtung kontinuierlich ansteigt, bis ein Dickenmaximum dZmax erreicht ist, das bezogen auf die Breite Bz genau in der Mitte der Zähne 3 liegt.

Bei dem in erfindungsgemäßer Weise feinzubearbeitenden Werkstück 10 handelt es sich um ein konventionelles, mit einer als Schrägverzahnung ausgebildeten Innenverzahnung 11 versehenes Zahnrad, das durch spanabhebende Bearbeitung aus einem Rohling geformt und einer Härtung unterzogen worden ist.

Das Werkstück 10 ist in einem hier der Übersichtlichkeit halber nicht gezeigten Werkstückhalter eingespannt, der ebenfalls mit einem hier nicht gezeigten Drehantrieb verkoppelt ist, welcher das Werkstück 10 im Gebrauch um eine Drehachse Dw rotierend antreibt. Die Drehachse Dw ist dabei in konventioneller Weise in Bezug auf die Drehachse Dz des Verzahnungswerkzeugs 1 unter einem Achskreuzwinkel Σ ausgerichtet.

Darüber hinaus ist der Werkstückhalter auf einem nicht gezeigten Stellantrieb gelagert, der dazu vorgesehen ist, den Werkstückhalter mit dem Werkstück 10 im Gebrauch in bezogen auf die Werkstückdrehachse Dw axialer Richtung AX+,AX- oszillierend zwischen zwei Umkehrpositionen P1,P2 hin und her zu bewegen, wobei mit "Ax+" die axiale Richtung bei der Hinbewegung und mit "AX-" die entgegengesetzte axiale Richtung bei der Rückbewegung des Werkstücks 10 bezeichnet sind. Mittels der Stelleinrichtung können den in axialer Richtung AX+,AX- gerichteten Bewegungen des Werkstücks 10 weitere Bewegungen um zusätzliche Achsen, beispielsweise eine in radialer Richtung R gerichtete Zustellung, überlagert werden, wenn an den Zahnflanken nicht nur linear Material abgetragen werden soll, sondern auch bestimmte Formelemente, wie eine Breitenballigkeit, abgebildet werden sollen.

Im Gegensatz zum Werkstück 10 wird das Verzahnungswerkzeug 1 während der Bearbeitung des Werkstücks 10 in axialer Richtung AX+,AX- nicht bewegt, sondern rotiert nur um seine Drehachse Dw.

Die Zähne 12 der Innenverzahnung 11 des Werkstücks 10 erstrecken sich jeweils zwischen den Stirnseiten 13,14 des Werkstücks 10 über eine Breite Bw und weisen über die Breite Bw eine konstante Dicke dW auf. Benachbarte Zähne 12 begrenzen dabei zwischen sich mit ihren Zahnflanken 15,16 jeweils eine Zahnlücke 17.

Die Breite Bw der Zähne 12 der Verzahnung 11 des Werkstücks 10 ist dabei deutlich größer als die Breite Bz des Verzahnungswerkzeugs 1. So beträgt das Verhältnis Bw/Bz beim hier gezeigten Beispiel etwa 6:1.

Für die Feinbearbeitung der Zähne 12 der Innenverzahnung 11 wird das Werkstück 10 in die erste Umkehrposition P1 bewegt. Diese befindet sich außerhalb der Außenverzahnung 2 des Verzahnungswerkzeugs 1, so dass in dieser Position P1 die in axialer Richtung AX+ vordere Stirnseite 13 des Werkstücks 10 nächstbenachbart zur Stirnseite 13 des Verzahnungswerkzeugs 1 angeordnet ist.

Das Verzahnungswerkzeug 1 ist dabei in radialer Richtung R auf die Innenverzahnung 11 zu um einen Betrag zugestellt, der der Tiefe entspricht, über die an den Zahnflanken 15,16 der Zähne 12 beim anschließend absolvierten Durchlauf der Zähne 3 des Verzahnungswerkzeugs 1 durch die Zahnlücken 17 des Werkstücks 10 Material abgetragen werden soll.

Indem nun das Werkstück 10 in axialer Richtung AX+ axial entlang seiner Drehachse Dz kontinuierlich relativ zum Verzahnungswerkzeug 1 vorgeschoben wird, werden die Verzahnungen 2,11 der gleichläufig rotierend um ihre jeweilige Drehachse Dz,Dw angetriebenen Verzahnungswerkzeuge 1 und Werkstück 10 in wälzenden Eingriff gebracht.

Als Folge des wälzenden Eingriffs und der radialen Zustellung wird von den Zähnen 3 des Verzahnungswerkzeugs 1 nun Material von den Zahnflanken 15,16 der Zähne 12 abgetragen. Dabei kommt zunächst der weniger dicke Bereich der Zähne 3 des Verzahnungswerkzeugs 1, der an die in Bezug auf die aktuelle Richtung AX+ der axialen Bewegung hintere Stirnseite 4 des Verzahnungswerkzeug 1 angrenzt, in Eingriff mit den zugeordneten Zähnen 12 des Werkstücks 10, so dass der Materialabtrag an dem mit dem jeweiligen Zahn 3 des Verzahnungswerkzeugs 1 in Kontakt kommenden Zahn 12 des Werkstücks 10 unmittelbar einsetzt. Bei fortgesetzter Bewegung des Werkstücks 10 in axialer Richtung AX+ drängen die ausgehend von der Stirnseite 4 zunehmend dicker werdenden Zähne 3 des Verzahnungswerkzeugs 1 immer tiefer in das Material der Zähne 12 des Werkstücks 10, so dass fortlaufend mehr Material von den Zähnen 12 abgetragen wird, bis das Dickenmaximum dZmax der Zähne des Verzahnungswerkzeugs 1 erreicht ist.

Durch die Bewegung in axialer Richtung AX+ nähert sich die in Bezug auf die axiale Richtung AX+ hintere Stirnseite 14 des Werkstücks 10 der in axialer Richtung AX+ vorderen Stirnseite 5 des Verzahnungswerkzeugs 1, wogegen sich die in axialer Richtung AX+ vordere Stirnseite 13 des Werkstücks 10 von der in axialer Richtung AX+ gesehen hinteren Stirnseite 4 des Verzahnungswerkszeugs 1 entfernt.

Die Vorschubbewegung des Verzahnungswerkzeugs 1 in der axialen Richtung AX+ wird fortgesetzt, bis sich die Stelle, an denen die Zähne 3 ihre größte Dicke dZmax aufweisen, außerhalb der Verzahnung 11 des Werkstücks 10 befindet. In dieser Stellung hat das Werkstück 10 die zweite Umkehrposition P2 seiner axialen Bewegung erreicht. Der erste Durchlauf der Zähne 3 des Verzahnungswerkzeugs 1 durch die Zähne 12 der Verzahnung 11 des Werkstücks 10 ist damit abgeschlossen.

Sofern der an den Zähnen 12 des Werkstücks 10 mit dem ersten Durchlauf bewirkte Materialabtrag nicht ausreicht, um der Verzahnung 11 des Werkstücks 10 die geforderte Endgeometrie zu verleihen, kann nun ein zweiter Durchlauf absolviert werden. Dazu wird das Verzahnungswerkzeug 1, erforderlichenfalls nach einer weiteren Zustellung in radialer Richtung R, aus der Umkehrposition P2 in entgegengesetzter axialer Richtung AX- erneut durch die Verzahnung 11 des Werkstücks 10 bewegt, bis die Umkehrposition P1 erreicht und der zweite Durchlauf abgeschlossen ist.

Erforderlichenfalls werden weitere Durchläufe in der voranstehend erläuterten Weise absolviert, bis die Zähne 12 des Werkstücks 10 die geforderte Endgeometrie aufweisen.

Mit der Erfindung steht somit ein Verfahren zum Feinbearbeiten eines eine Verzahnung 11 aufweisenden Werkstücks 10 zur Verfügung, bei dem Zähne 3 eines um eine Drehachse Dz rotierenden Verzahnungswerkzeugs 1 mit Zähnen 12 der Verzahnung 11 des um eine Drehachse Dw rotierenden Werkstücks 10 in wälzenden Eingriff gebracht und das Verzahnungswerkzeug 1 und das Werkstück 10 in einer zur Drehachse Dw des Werkstücks 10 parallelen Richtung AX+,AX- relativ zueinander bewegt werden. Die Dicke dZ der Zähne 3 des Verzahnungswerkzeugs 1 nimmt ausgehend von ihrer bezogen auf die jeweilige Bewegung in axialer Richtung AX+,AX- vorderen Stirnseite 4,5 bis zu einem Dickenmaximum dZmax zu. Um weiter gesteigerte Abtragsleistungen bei gleichzeitig langer Lebensdauer zu erreichen, gilt dabei erfindungsgemäß für das aus der Breite Bw der Zähne 12 des Werkstücks 10 und der Breite Bz der Zähne 3 des Verzahnungswerkzeugs 1 gebildete Verhältnis Bw/Bz:

$2 \leq Bw/Bz \leq 20$. Vor jedem Durchfahren seiner Zähne 3 durch die Zahnlücken 17 des Werkstücks 1.0 in der jeweiligen axialen Richtung AX+,AX- wird das Verzahnungswerkzeug 1 jeweils an einer Position P1,P2 positioniert, bei der sich das Dickenmaximum dZmax der Zähne 3 des Verzahnungswerkzeugs 1 außerhalb der Verzahnung 11 des Werkstücks 10 befindet. Dann durchfahren in Folge der Relativbewegung von Werkstück 10 und Verzahnungswerkzeug 1 dessen Zähne in axialer Richtung AX+,AX- bis zum Austritt des Dickenmaximums dZmax jeden Zahn 3 des Verzahnungswerkzeugs 1 aus der ihm zugeordneten Zahnlücke 17 der Verzahnung 11 des Werkstücks 10.

Erfindungsgemäß werden somit zum Feinbearbeiten eines mit einer Verzahnung 11 versehenen, um eine Drehachse Dw rotierenden Werkstücks 10 Zähne 3 eines um eine Drehachse Dz rotierenden Verzahnungswerkzeugs 1 mit Zähnen 12 des Werkstücks 10 in Eingriff gebracht und das Verzahnungswerkzeug 1 und das Werkstück 10 in einer zur Drehachse Dw parallelen Richtung AX+,AX- relativ zueinander bewegt. Die Dicke dZ der Zähne 3 des Verzahnungswerkzeugs 1 nimmt ausgehend von ihrer in axialer Richtung AX+,AX- jeweils vorderen Stirnseite 4,5 bis zu einem Dickenmaximum dZmax zu. Eine hohe Abtragsleistungen und lange Lebensdauer des Verzahnungswerkzeugs 1 wird dadurch erreicht,

- dass erfindungsgemäß gilt

$$2 \leq Bw/Bz \leq 20$$

mit BW = Breite Bw der Zähne der Verzahnung 11 des Werkstücks 10,

Bz = Breite der Zähne 3 des Verzahnungswerkzeugs 1,

- dass das Verzahnungswerkzeug 1 vor jedem in der jeweiligen axialen Richtung AX+,AX- erfolgenden Durchfahren seiner Zähne 3 durch die Zahnlücken 17 des Werkstücks 10 an einer Position P1,P2 positioniert wird, bei der sich das Dickenmaximum dZmax der Zähne 3 des Verzahnungswerkzeugs 1 außerhalb der Verzahnung 11 des Werkstücks 10 befindet, und

- dass die Zähne 3 des Verzahnungswerkzeugs 1 in Folge der Relativbewegung von Werkstück 10 und Verzahnungswerkzeug 1 in axialer Richtung AX+,AX- jeweils durch die ihnen zugeordnete Zahnlücke 17 der Verzahnung 11 des Werkstücks 10 bewegt werden, bis das Dickenmaximum dZmax jedes Zahns 3 aus der zugeordneten Zahnlücke 17 ausgetreten ist.

BEZUGSZEICHEN

| 1 | Verzahnungswerkzeug |
|---|---|
| 2 | Außenverzahnung des Verzahnungswerkzeugs 1 |
| 3 | Zähne der Außenverzahnung 2 |
| 4,5 | Stirnseiten |
| 6,7 | Zahnflanken der Zähne 3 |
| 8,9 | Zahnlücken der Verzahnung 2 |
| 10 | Werkstück (innenverzahntes Zahnrad) |
| 11 | Innenverzahnung des Werkstücks 10 |
| 12 | Zähne der Innenverzahnung 11 |
| 13,14 | Stirnseiten des Werkstücks 10 |
| 15,16 | Zahnflanken der Zähne 12 |
| 17 | Zahnlücken des Werkstücks 10 |

| AX+,AX- | axiale Richtung |
|---|---|
| Bw | Breite des Werkstücks 10 |
| Bz | Breite des Verzahnungswerkzeugs 1 |
| Dw | Drehachse des Werkstücks 10 |
| Dz | Werkzeugdrehachse |
| dZ | Dicke der Zähne 3 |
| dZmin | minimale Dicke der Zähne 3 des Verzahnungswerkzeugs 1 |
| dZmax | maximale Dicke der Zähne 3 des Verzahnungswerkzeugs 1 |
| dW | Dicke der Zähne 12 |

P1,P2   Umkehrpositionen
R       radiale Richtung
Σ       Achskreuzwinkel

**Patentansprüche**

1.  Verfahren zum Feinbearbeiten eines mit einer Verzahnung (11) versehenen Werkstücks (10), bei dem Zähne (3) eines zahnradförmigen Verzahnungswerkzeugs (1), das um eine Drehachse (Dz) rotiert, mit Zähnen (12) der Verzahnung (11) des um eine Drehachse (Dw) rotierenden Werkstücks (10) in wälzenden Eingriff gebracht werden, während das Verzahnungswerkzeug (1) und das Werkstück (10) in einer zur Drehachse (Dw) des Werkstücks (10) parallelen Richtung (AX+,AX-) relativ zueinander bewegt werden, wobei die Dicke (dZ) der Zähne (3) des Verzahnungswerkzeugs (1) jeweils ausgehend von ihrer bezogen auf die jeweilige Bewegung in axialer Richtung (AX+,AX-) vorne liegenden Stirnseite (4,5) bis zu einem Dickenmaximum (dZmax) zunimmt,
    **dadurch gekennzeichnet,**

    - **dass** für das aus der Breite Bw der Zähne (12) der Verzahnung des Werkstücks (10) und der Breite Bz der Zähne (3) des Verzahnungswerkzeugs (1) gebildete Verhältnis Bw/Bz gilt:

    $$2 \leq Bw/Bz \leq 20,$$

    - **dass** das Verzahnungswerkzeug (1) vor jedem in der jeweiligen axialen Richtung (AX+,AX-) erfolgenden Durchfahren seiner Zähne (3) durch die Zahnlücken (17) der Verzahnung (11) des Werkstücks (10) an einer Position (P1,P2) positioniert wird, bei der sich das Dickenmaximum (dZmax) der Zähne (3) des Verzahnungswerkzeugs (1) außerhalb der Verzahnung (11) des Werkstücks (10) angeordnet befindet, und
    - **dass** die Zähne (3) des Verzahnungswerkzeugs (1) in Folge der Relativbewegung von Werkstück (10) und Verzahnungswerkzeug (1) in axialer Richtung (AX+,AX-) jeweils durch die ihnen zugeordnete Zahnlücke (17) der Verzahnung (11) des Werkstücks (10) bewegt werden, bis das Dickenmaximum (dZmax) jedes Zahns (3) aus der ihm zugeordneten Zahnlücke (17) ausgetreten ist.

2.  Verfahren nach Anspruch 1, **dadurch gekennzeichnet, dass** das Werkstück (10) ein während der Feinbearbeitung um eine Werkstück-Drehachse (Dw) rotierendes Zahnrad ist.

3.  Verfahren nach Anspruch 2, **dadurch gekenn-**

zeichnet, **dass** die Drehachse (Dz) des Verzahnungswerkzeugs (1) bezogen auf die Drehachse (Dw) des Werkstücks (10) unter einem Achskreuzwinkel (Σ) ausgerichtet ist.

4.  Verfahren nach Anspruch 2 oder 3, **dadurch gekennzeichnet, dass** die Verzahnung (11) des Werkstücks (10) eine Innenverzahnung (11) und die Verzahnung des Verzahnungswerkzeugs (1) eine Außenverzahnung (2) ist.

5.  Verfahren nach einem der voranstehenden Ansprüche, **dadurch gekennzeichnet, dass** nur das Werkstück (10) in axialer Richtung (AX+,AX-) bewegt wird.

6.  Verfahren nach einem der voranstehenden Ansprüche, **dadurch gekennzeichnet, dass** für das Verhältnis Bw/Bz gilt:

    $$2 < Bw/Bz < 20$$

7.  Verfahren nach Anspruch 6, **dadurch gekennzeichnet, dass** für das Verhältnis Bw/Bz gilt:

    $$2 < Bw/Bz < 5$$

8.  Verfahren nach einem der voranstehenden Ansprüche, **dadurch gekennzeichnet, dass** die Dicke (dZ) der Zähne (3) der Verzahnung des Verzahnungswerkzeugs (1) ausgehend von der einen Stirnseite (4,5) der Zähne (3) bis zu dem Dickenmaximum (dZmax) kontinuierlich zunimmt.

9.  Verfahren nach Anspruch 8, **dadurch gekennzeichnet, dass** die Zunahme der Dicke (dZ) einer Kreisfunktion folgt.

10. Verfahren nach Anspruch 8, **dadurch gekennzeichnet, dass** die Zunahme der Dicke (dZ) einer Ellipsenfunktion folgt.

11. Verfahren nach einem der voranstehenden Ansprüche, **dadurch gekennzeichnet, dass** die axiale Relativbewegung zwischen dem Werkstück (10) und dem Verzahnungswerkzeug (1) in periodisch wechselnder Richtung (AX+,AX-) durchgeführt wird, **dass** das Dickenmaximum (dZmax) der Zähne (3) der Verzahnung (2) des Verzahnungswerkzeugs (1) jeweils zwischen den Stirnseiten (3,4) der Zähne (3) der Verzahnung (2) angeordnet ist und dass die Dicke (dZ) der Zähne (3) des Verzahnungswerkzeugs (1) ausgehend von jeder ihrer Stirnseite (4,5) bis zum Dickenmaximum (dZmax) des jeweiligen Zahns (3) zunimmt.

**12.** Verfahren nach Anspruch 11, **dadurch gekennzeichnet, dass** das Dickenmaximum (dZmax) mittig zwischen den Stirnseiten (4,5) der Zähne (3) des Verzahnungswerkzeugs (1) ausgebildet ist.

**13.** Verfahren nach einem der voranstehenden Ansprüche, **dadurch gekennzeichnet, dass** die Relativbewegung in axialer Richtung (AX+,AX-) in zwei oder mehr Durchläufen absolviert wird.

**14.** Verfahren nach Anspruch 13, **dadurch gekennzeichnet, dass** nach jedem Durchlauf eine Zustellung in radialer Richtung (R) durchgeführt wird.

**Claims**

**1.** Method for fine machining a workpiece (10) provided with a gearing (11), in which teeth (3) of a gearwheel-shaped gear cutting tool (1), which rotates about a rotation axis (Dz), are brought into rolling engagement with teeth (12) of the gearing (11) of the workpiece (10) rotating about a rotation axis (Dw) while the gear cutting tool (1) and the workpiece (10) are being moved relative to each other in a direction (AX+,AX-) parallel to the rotation axis (Dw) of the workpiece (10), wherein the thickness (dZ) of the teeth (3) of the gear cutting tool (1) increases, in each case, starting from their front side (4,5) located in front with respect to the respective movement in axial direction (AX+,AX-), up to a thickness maximum (dZmax),
**characterized**

- **in that** the following applies to the ratio Bw/Bz formed by the width Bw of the teeth (12) of the gearing of the workpiece (10) and the width Bz of the teeth (3) of the gear cutting tool (1):

$$2 \leq \mathrm{Bw}/\mathrm{Bz} \leq 20,$$

- **in that** the gear cutting tool (1), before each pass of its teeth (3) through the tooth gaps (17) of the gearing (11) of the workpiece (10) in the respective axial direction (AX+,AX-), is positioned at a position (P1,P2) in which the thickness maximum (dZmax) of the teeth (3) of the gear cutting tool (1) is located outside the gearing (11) of the workpiece (10), and
- **in that** the teeth (3) of the gear cutting tool (1), as a consequence of the relative movement of workpiece (10) and the gear cutting tool (1) in axial direction (AX+,AX-), are each moved through the tooth gap (17) of the gearing (11) of the workpiece (10) assigned to them until the thickness maximum (dZmax) of each tooth (3) has exited from the tooth gap (17) assigned to it.

**2.** Method according to claim 1, **charcterized in that** the workpiece (10) is a gearwheel rotating about a workpiece rotation axis (Dw) during the fine machining.

**3.** Method according to claim 2, **characterized in that** the rotation axis (Dz) of the gear cutting tool (1) is oriented at an axis crossing angle ($\Sigma$) with respect to the rotation axis (Dw) of the workpiece (10).

**4.** Method according to claim 2 or 3, **characterized in that** the gearing (11) of the workpiece (10) is an internal gearing (11) and the gearing of the gear cutting tool (1) is an external gearing (2).

**5.** Method according to any one of the preceding claims, **characterized in that** only the workpiece (10) is moved in axial direction (AX+,AX-).

**6.** Method according to any one of the preceding claims, **characterized in that** the following applies to the ratio Bw/Bz:

$$2 < \mathrm{Bw}/\mathrm{Bz} < 20$$

**7.** Method according to claim 6, **characterized in that** the following applies to the ratio Bw/Bz:

$$2 < \mathrm{Bw}/\mathrm{Bz} < 5$$

**8.** Method according to any one of the preceding claims, **characterized in that** the thickness (dZ) of the teeth (3) of the gearing of the gear cutting tool (1) increases continuously starting from the one front side (4,5) of the teeth (3) up to the thickness maximum (dZmax).

**9.** Method according to claim 8, **characterized in that** the increase of the thickness (dZ) follows a circular function.

**10.** Method according to claim 8, **characterized in that** the increase of the thickness (dZ) follows an ellipse function.

**11.** Method according to any one of the preceding claims, **characterized in that** the axial relative movement between the workpiece (10) and the gear cutting tool (1) is carried out in periodically changing direction (AX+,AX-), **in that** the thickness maximum (dZmax) of the teeth (3) of the gearing (2) of the gear cutting tool (1) is arranged in each case between the front sides (3,4) of the teeth (3) of the gearing (2), and **in that** the thickness (dZ) of the teeth (3) of the gear cutting tool (1) increases starting from each of their front sides (4,5) up to the thickness maximum (dZmax) of the respective tooth (3).

12. Method according to claim 11, **characterized in that** the thickness maximum (dZmax) is formed in the center between the front sides (4,5) of the teeth (3) of the gear cutting tool (1).

13. Method according to any one of the preceding claims, **characterized in that** the relative movement in axial direction (AX+,AX-) is performed in two or more passes.

14. Method according to claim 13, **characterized in that** an infeed in radial direction (R) is carried out after each pass.

**Revendications**

1. Procédé de travail de précision d'une pièce dentée (10) équipée d'une denture (11)

  - dans lequel des dents (3) d'un outil de taille d'engrenage (1) en forme de roue dentée, qui tourne autour d'un axe de rotation (Dz), sont amenées en prise par roulement avec des dents (12) de la denture (11) de la pièce (10) tournant autour d'un axe de rotation (Dw), tandis que l'outil de taille d'engrenage (1) et la pièce (10) sont déplacés relativement l'un par rapport à l'autre dans une direction (AX+, AX-) parallèle à l'axe de rotation (Dw), l'épaisseur (dZ) des dents (3) de l'outil à tailler les engrenages (1) augmentant respectivement à partir de leur face frontale (4, 5) située à l'avant par rapport au mouvement respectif dans la direction axiale (AX+, AX-) jusqu'à un maximum d'épaisseur (dZmax), **caractérisé**
  - **en ce que**, pour le rapport Bw/Bz formé à partir de la largeur Bw des dents (12) de la denture de la pièce (10) et de la largeur Bz des dents (3) de l'outil de taille d'engrenage (1), vaille :

$$2 \leq Bw/Bz \leq 20,$$

  - **en ce que** l'outil de taille d'engrenage (1) est positionné, avant chaque passage de ses dents (3) dans la direction axiale respective (AX+, AX-) à travers les entredents (17) de la denture (11) de la pièce (10), dans une position (P1, P2) dans laquelle le maximum d'épaisseur (dZmax) des dents (3) de l'outil à tailler les engrenages (1) se trouve arrangé à l'extérieur de la denture (11) de la pièce (10), et
  - **en ce que** les dents (3) de l'outil de taille d'engrenage (1) sont déplacées, suite au mouvement relatif de la pièce (10) et de l'outil de taille d'engrenage (1) dans la direction axiale (AX+, AX-), respectivement à travers l'entredent (17) de la denture (11) de la pièce (10) qui leur est associé, jusqu'à ce que le maximum d'épaisseur (dZmax) de chaque dent (3) soit sorti de l'entredent (17) qui lui est associé.

2. Procédé selon la revendication 1, **caractérisé en ce que** la pièce (10) est une roue dentée tournant autour d'un axe de rotation (Dw) de la pièce pendant le travail de précision.

3. Procédé selon la revendication 2, **caractérisé en ce que** l'axe de rotation (Dz) de l'outil de taille d'engrenage (1) est orienté selon un angle de croisement d'axe (Σ) par rapport à l'axe de rotation (Dw) de la pièce (10).

4. Procédé selon la revendication 2 ou 3, **caractérisé en ce que** la denture (11) de la pièce (10) est une denture intérieure (11) et la denture de l'outil de taille d'engrenage (1) est une denture extérieure (2).

5. Procédé selon l'une des revendications précédentes, **caractérisé en ce que** seule la pièce (10) est déplacée dans la direction axiale (AX+, AX-).

6. Procédé selon l'une des revendications précédentes, **caractérisé en ce que** pour le rapport Bw/Bz vaille:

$$2 < Bw/Bz < 20$$

7. Procédé selon la revendication 6, **caractérisé en ce que** pour le rapport Bw/Bz vaille:

$$2 < Bw/Bz < 5$$

8. Procédé selon l'une des revendications précédentes, **caractérisé en ce que** l'épaisseur (dZ) des dents (3) de la denture de l'outil de taille d'engrenage (1) augmente de manière continue à partir d'une face frontale (4, 5) des dents (3) jusqu'à l'épaisseur maximale (dZmax).

9. Procédé selon la revendication 8, **caractérisé en ce que** l'augmentation de l'épaisseur (dZ) suit une fonction circulaire.

10. Procédé selon la revendication 8, **caractérisé en ce que** l'augmentation de l'épaisseur (dZ) suit une fonction elliptique.

11. Procédé selon l'une des revendications précédentes, **caractérisé en ce que** le mouvement axial relatif entre la pièce (10) et l'outil de taille d'engrenage (1) est effectué dans une direction (AX+, AX-) qui change périodiquement, **en ce que** le maximum d'épaisseur (dZmax) des dents (3) de la denture (2) de l'outil de taille d'engrenage (1) est disposé respectivement entre les faces frontales (3, 4) des dents (3) de la denture (2) et **en ce que** l'épaisseur (dZ) des dents (3) de l'outil de taille d'engrenage (1) augmente à partir de chacune de leurs faces frontales (4, 5) jusqu'au maximum d'épaisseur (dZmax) de la dent respective (3).

12. Procédé selon la revendication 11, **caractérisé en ce que** le maximum d'épaisseur (dZmax) est formé de manière centrée entre les faces frontales (4, 5) des dents (3) de l'outil de taille d'engrenage (1).

13. Procédé selon l'une des revendications précédentes, **caractérisé en ce que** le mouvement relatif dans la direction axiale (AX+, AX-) est effectué en deux passages ou plus.

14. Procédé selon la revendication 13, **caractérisé en ce qu'**une avance dans la direction radiale (R) est effectuée après chaque passage.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018130260 A1
- JP H0282424 U